# EUROPEAN PATENT SPECIFICATION

(11) **EP 2 756 979 B1**
(45) Date of publication and mention of the grant of the patent: **26.12.2018**
(21) Application number: 14151045.3
(22) Date of filing: 14.01.2014
(51) Int. Cl.: B60L 3/00

(54) **Drive device for railway vehicle**
Antriebsvorrichtung für ein Eisenbahnfahrzeug
Dispositif de commande pour véhicule ferroviaire

(30) Priority: 16.01.2013 JP 2013005471
(43) Date of publication of application: 23.07.2014
(73) Proprietor: Hitachi, Ltd., Tokyo 100-8280 (JP)
(72) Inventor: Ayata, Masataka, Chiyoda-ku, Tokyo 100-8280 (JP); Hishida, Akihiro, Chiyoda-ku, Tokyo 100-8280 (JP); Kono, Yasuhiko, Chiyoda-ku, Tokyo 100-8280 (JP); Toyota, Eiichi, Chiyoda-ku, Tokyo 100-8280 (JP)
(74) Representative: Gill, Stephen Charles

(56) References cited:
- JP-A- H09 199 648
- JP-A- 2008 211 956

## Description

### BACKGROUND OF THE INVENTION

### 1. Field of the Invention

The present invention relates to a drive device for a railway vehicle, and particularly to a cooler of a drive device for cold regions.

### 2. Description of the Related Art

In general, a drive device for a railway vehicle converts electric power supplied from a power supply using semiconductor elements for electric power which semiconductor elements perform switching operation (which semiconductor elements will hereinafter be referred to as "switching elements") such as IGBTs (Insulated Gate Bipolar Transistors) or the like, and supplies the converted electric power to devices such as a motor or lighting in the train. The switching elements generate heat due to a loss caused by internal resistance or the like during electric power conversion, and may therefore lose functions of the switching elements at a certain temperature or higher. Thus, the switching elements need to be prevented from rising in temperature by a cooler.

The cooler generally includes a heat receiving portion, a heat radiating portion, and a heat transport portion connecting the heat receiving portion to the heat radiating portion. The heat transport portion typically uses water as a coolant and is classified into a few types. For example, there is so-called water circulation cooling (water cooling) in which water filling a heat transport tube is circulated between the heat receiving portion and the heat radiating portion using a pump, and heat absorbed by the heat receiving portion is released by the heat radiating portion. There is also a heat pipe system in which water is moved between the heat receiving portion and the heat radiating portion by using phase changes of the water without using a pump.

In the heat pipe system, the water vaporizes when absorbing the heat of the elements in the heat receiving portion, and moves as water vapor to the heat radiating portion. The water vapor is cooled into water in the heat radiating portion, and returns as water to the heat receiving portion. The heat pipe system does not need a pump for the circulation of water. Thus, the heat pipe system enables devices to be configured simply and is widely used mainly in railway vehicles for conventional railway lines.

In a heat pipe type cooler, water is frozen when outside air temperature in a cold region or the like is equal to or lower than the melting point of water (0°C or lower). In this case, heat transport based on the above-described principles cannot be performed, so that the temperature of switching elements rises.

To deal with such a problem in the heat pipe type cooler, JP-2008-211956-A discloses a method in which the temperature of a cooler is measured, and a warm-up operation mode that makes the current of switching elements smaller than during normal operation when the temperature is equal to or lower than 0°C is incorporated to control a loss caused in the switching elements.

### SUMMARY OF THE INVENTION

However, the method disclosed in JP-2008-211956-A has problems as follows.

In JP-2008-211956-A, the temperature of the cooler is measured at one point to determine whether the coolant is frozen. Thus, the state of the coolant may not be determined accurately. For example, in a case where the temperature of a heat receiving portion is measured, a frozen state of the coolant may not be detected even when the coolant is frozen with the temperature of a heat radiating portion lower than the temperature of the heat receiving portion. In addition, in a case where the temperature is measured at the heat radiating portion, because the heat radiating portion is in direct contact with outside air, when the outside air temperature falls below the freezing point, the detected temperature is below the freezing point even if the water is hardly frozen. Thus, it may be determined erroneously that the water is frozen, and electric current may be limited.

For the above reasons, a method for accurately detecting the frozen state of the coolant is necessary.

The present invention has been made in view of the problems of the conventional technology described above. The present invention proposes a method for accurately detecting a frozen state of a coolant to control a drive device in an environment such as a cold region or the like in which the coolant of a cooler may be frozen.

According to the present invention, there is provided a drive device for a railway vehicle as set out in claim 1.

According to one embodiment of the present invention, there is provided a drive device for a DC vehicle, the drive device including: an electric power converting device including a plurality of switching elements controlled to be turned on and off, the electric power converting device converting DC electric power supplied from a DC overhead wire into three-phase AC electric power; a three-phase load supplied with the three-phase AC electric power output from the electric power converting device, a control device for controlling the electric power converting device, and a cooler using a liquid as a coolant and cooling the switching elements; a heat receiving portion of the cooler, the heat receiving portion being in contact with the switching elements to absorb heat of the switching elements, and a heat receiving portion temperature sensor for measuring a temperature of the heat receiving portion; and a heat radiating portion of the cooler, the heat radiating portion radiating the heat absorbed from the switching elements, and a heat radiating portion temperature sensor for measuring a temperature of the heat radiating portion. The control device has a function of feeding a predetermined current through the switching elements when determining that there is a possibility of the coolant of the cooler being frozen, calculating a thermal resistance of the cooler using values of the heat receiving portion temperature sensor and the heat radiating portion temperature sensor, and determining that the coolant of the cooler is frozen when a magnitude of the thermal resistance is larger than a predetermined value.

According to the present invention, in a cooler using a liquid as a coolant, a frozen state of the cooler can be detected accurately at the time of a low temperature and thus appropriate warm-up operation can be performed. Therefore, a rise in temperature of elements can be prevented correctly, so that the reliability of the device can be improved. In addition, the efficiency of the device is improved because excessive warm-up operation is not necessary.

To the extent that they are compatible, the following optional features of the invention are applicable singly or in any combination.

The temperature of the heat receiving portion may be a temperature of the switching element or a temperature of a base of the first cooler, the base of the first cooler constituting a base material of the heat receiving portion, and the temperature of the heat radiating portion may be a temperature of a fin of the first cooler, a temperature of an end portion of a heat pipe used in the first cooler, or an outside air temperature.

The arithmetic section may calculate a maximum value of energizing current that can be fed through the switching element from the thermal resistance value when the arithmetic section determines that the coolant is frozen.

In a case where the first electric power converting device is stopped when the determination is made, the control device may perform a warm-up operation that makes the switching element generate heat to melt the frozen coolant, by controlling the energizing current of the switching element so as not to exceed the maximum value.

In a case where the first electric power converting device is not stopped when the determination is made, the control device may perform a warm-up operation that limits the energizing current of the switching element to the maximum value or smaller.

When the load is an AC motor, the control device may control the energizing current of the switching element such that torque produced by the AC motor does not accelerate or decelerate the vehicle.

When the load is an AC motor and an air brake of the vehicle is operating, the control device may control the energizing current of the switching element such that torque produced by the AC motor is lower than torque of the air brake.

The arithmetic section may calculate the thermal resistance value of the first cooler during the warm-up operation, and may end the warm-up operation by determining that the coolant is melted when a difference between the calculated thermal resistance value and a thermal resistance value when the coolant is melted completely becomes equal to or smaller than a predetermined value.

The arithmetic section may calculate the temperature of the heat receiving portion during the warm-up operation from the amount of heat generated by the switching element during the warm-up operation, the thermal resistance value of the first cooler when the arithmetic section determines that the coolant is frozen, and the measured value of the heat radiating portion temperature sensor, and may end the warm-up operation by determining that the coolant is melted when a difference between the calculated temperature of the heat receiving portion and the measured value of the heat receiving portion temperature sensor becomes equal to or larger than a predetermined value.

The arithmetic section may calculate an amount of heat necessary to melt the coolant and calculates the amount of heat generated by the switching element from the energizing current of the switching element during the warm-up operation, and may end the warm-up operation by determining that the coolant is melted when the amount of heat generated by the switching element exceeds the amount of heat necessary to melt the coolant.

The railway vehicle may further comprise: a second electric power converting device formed by a switching element to convert AC electric power supplied from an AC overhead wire into DC electric power and supply the DC electric power to the first electric power converting device; and a second cooler using a liquid as a coolant for cooling the second electric power converting device. The second cooler includes: a heat receiving portion in contact with the switching element, the heat receiving portion absorbing heat of the switching element, a heat receiving portion temperature sensor for measuring a temperature of the heat receiving portion, a heat radiating portion for radiating the heat absorbed from the switching element, and a heat radiating portion temperature sensor for measuring a temperature of the heat radiating portion. The control device controls the first electric power converting device and the second electric power converting device, and the control device includes an arithmetic section. When at least one of the following states occurs, the states being a state of at least one of the respective measured values of the heat receiving portion temperature sensor and the heat radiating portion temperature sensor of the first cooler becoming equal to or lower than a melting point of the coolant of the first cooler, and a state of at least one of the respective measured values of the heat receiving portion temperature sensor and the heat radiating portion temperature sensor of the second cooler becoming equal to or lower than the melting point of the coolant of the second cooler, the arithmetic section determines whether the coolant of the first cooler is frozen on a basis of respective measured values of the heat receiving portion temperature sensor and the heat radiating portion temperature sensor of the first cooler and whether the coolant of the second cooler is frozen on a basis of respective measured values of the heat receiving portion temperature sensor and the heat radiating portion temperature sensor of the second cooler, the measured values being detected by feeding a predetermined current through the respective switching elements of the first electric power converting device and the second electric power converting device. The temperature of the heat receiving portion of the second cooler may be a temperature of the switching element or a temperature of a base of the second cooler, the base of the second cooler constituting a base material of the heat receiving portion, and the temperature of the heat radiating portion of the second cooler may be a temperature of a fin of the second cooler, a temperature of an end portion of a heat pipe used in the second cooler, or an outside air temperature.

When the drive device comprises the second electric power converting device and the second cooler, the arithmetic section may make at least one of a determination of whether the coolant of the first cooler is frozen from a magnitude of a thermal resistance of the first cooler, the magnitude of the thermal resistance of the first cooler being calculated using the respective measured values of the heat receiving portion temperature sensor and the heat radiating portion temperature sensor of the first cooler and an amount of heat generated by the switching element of the first electric power converting device or an energizing current value corresponding to the amount of heat generated by the switching element of the first electric power converting device, and a determination of whether the coolant of the second cooler is frozen from a magnitude of a thermal resistance of the second cooler, the magnitude of the thermal resistance of the second cooler being calculated using the respective measured values of the heat receiving portion temperature sensor and the heat radiating portion temperature sensor of the second cooler and an amount of heat generated by the switching element of the second electric power converting device or an energizing current value corresponding to the amount of heat generated by the switching element of the second electric power converting device.

When the drive device comprises the second electric power converting device and the second cooler, optional features of the control device relating to the first electric power converting device and the first cooler can be applied also to the control device in respect of the second electric power converting device and the second cooler.

A fan or a blower for supplying air to: the heat radiating portions of the first cooler may be provided, or at least one of the respective heat radiating portions of the first cooler and the second cooler may be provided, and when the control device, upon determining that: the coolant of the first cooler is frozen, or at least one of the respective coolants of the first cooler and the second cooler is frozen, performs a warm-up operation, the control device may stop the fan or the blower entirely.

The control device may be provided to the vehicle having a ventilation duct for supplying a traveling wind to: the heat radiating portions of the first cooler, or at least one of the respective heat radiating portions of the first cooler and the second cooler, and when the control device, upon determining that: the coolant of the first cooler is frozen, or at least one of the respective coolants of the first cooler and the second cooler is frozen, performs a warm-up operation, the control device may close the ventilation duct.

### BRIEF DESCRIPTION OF THE DRAWINGS

Other objects, advantages and optional features of the invention will become apparent from the following description of embodiments with reference to the accompanying drawings in which:
FIG. 1 is a diagram showing a system configuration in Embodiment 1;
FIG. 2 is a flowchart of operation in Embodiment 1;
FIG. 3 is a diagram showing temporal changes in thermal resistance used to determine that a coolant is melted in Embodiments 1 and 2;
FIG. 4 is a diagram showing temporal changes in the measured value of a temperature sensor used to determine that the coolant is melted in Embodiments 1 and 2;
FIG. 5 is a diagram showing a system configuration in Embodiment 2;
FIG. 6 is a diagram showing a system configuration in Embodiment 3; and
FIG. 7 is a diagram showing a system configuration in Embodiment 4.

### DESCRIPTION OF THE PREFERRED EMBODIMENTS

Embodiments 1 to 4 for practicing the present invention will be described hereinafter.

### [Embodiment 1]

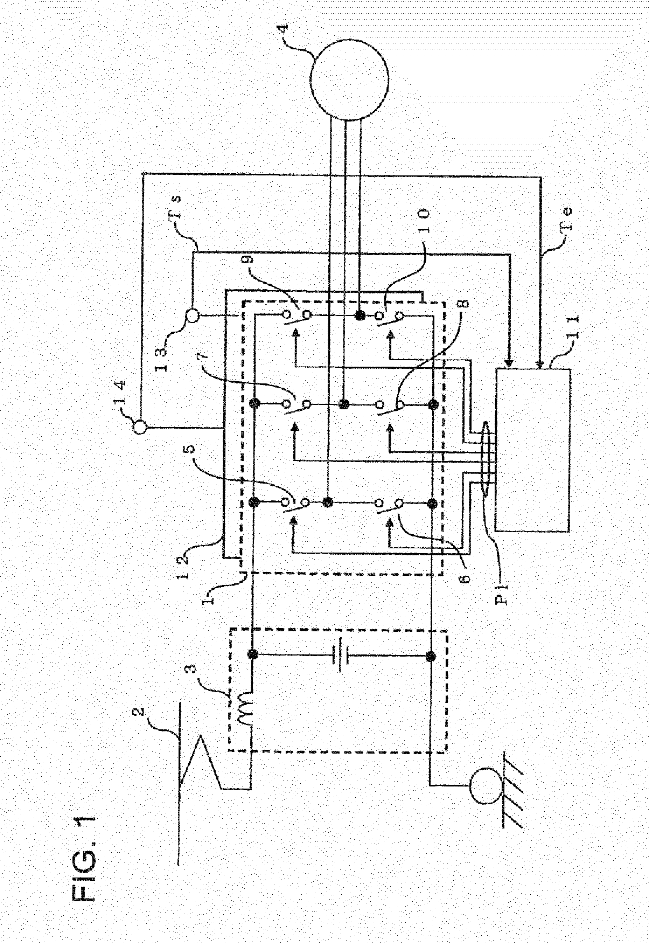

FIG. 1 shows a first embodiment (Embodiment 1) of a drive device for a railway vehicle according to the present invention.

An electric power converting device 1 is fed with DC electric power from a DC overhead wire 2 via a filter circuit 3, and converts the DC electric power into three-phase AC electric power to drive a three-phase AC motor 4. In addition, the electric power converting device 1 includes switching elements 5 to 10 such as IGBTs, GTO thyristors, MOSFETs, or the like. Each of the switching elements is individually controlled to be turned on and off by a signal Pi output from a control device 11.

A cooler 12 uses a liquid such as water or the like as a coolant. The cooler 12 cools the switching elements 5 to 10. A first temperature sensor 13 measures the temperature of the switching elements 5 to 10. The first temperature sensor 13 outputs switching element first temperature information Ts. A second temperature sensor 14 measures a temperature on the side of a heat radiating portion of the cooler, for example, the temperature of an end portion of a heat pipe or a fin. The second temperature sensor 14 outputs second temperature information Te. The temperature information Ts and Te is input to the control device 11.

The temperature measured by the first sensor 13 does not need to be the temperature of the switching elements 5 to 10 as long as the temperature measured by the first sensor 13 is the temperature on the side of a heat receiving portion of the cooler. The temperature measured by the first sensor 13 may be the temperature of the base of the cooler which base constitutes the base material of the heat receiving portion, for example. In addition, a sensor for measuring an outside air temperature for the management of an air conditioner may be substituted for the second temperature sensor 14. In this case, the temperature information Te is the outside air temperature. Further, a plurality of first temperature sensors and a plurality of second temperature sensors may be provided.

An actual operation will next be described.

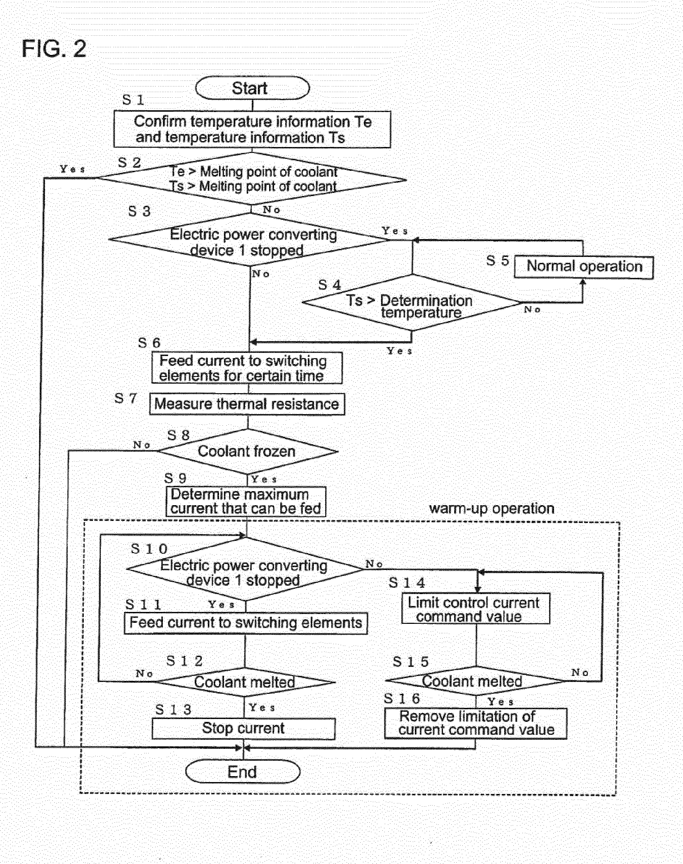

FIG. 2 is a flowchart of a flow of operation according to the present invention.

First, the control device 11 monitors the first temperature information Ts and the second temperature information Te (S1). When at least one of the first temperature information Ts and the second temperature information Te is equal to or lower than the melting point of the coolant used in the cooler 12, for example equal to or lower than 0°C in the case where water is used as the coolant (No in S2), the control device 11 determines that there is a possibility of the coolant being frozen. However, when the electric power converting device 1 is already operating at a point in time that the control device 11 determines that there is a possibility of the coolant being frozen (No in S3), the coolant may be melted due to heat generated by the operation, and therefore the normal operation is performed first.

At this time, when the coolant is frozen, the performance of the cooler is decreased, and thus the first temperature information Ts rises to a temperature higher than when the coolant is melted. Accordingly, a determination temperature for determining whether the coolant is frozen is provided. When the first temperature information Ts is equal to or lower than the determination temperature (No in S4), the electric power converting device 1 is made to continue the normal operation (S5). When the first temperature information Ts exceeds the predetermined determination temperature, on the other hand, it is determined that the coolant is frozen (Yes in S4). This determination temperature is preferably a maximum temperature that can be indicated by the first temperature sensor 13 when the electric power converting device 1 operates at a maximum output level in a state of the second temperature information Te being equal to or lower than the melting point of the coolant.

When there is a possibility of the coolant being frozen, the control device 11 feeds a predetermined current through the switching elements 5 to 10 (S6), and obtains the thermal resistance Rth1 of the cooler from an amount of heat generated by the switching elements 5 to 10, the second temperature information Te, and the first temperature information Ts (S7). Here, a relation between the energizing current of the switching elements 5 to 10 and the amount of heat can be obtained in advance from the specifications of the switching elements, for example. The amount of heat generated by the switching elements can therefore be obtained from the energizing current.

The thermal resistance Rth1 is high when the coolant is frozen. Thus, when the thermal resistance Rth1 is higher than a predetermined value, the control device 11 determines that the coolant of the cooler 12 is frozen (Yes in S8). At this time, the control device 11 may determine that the coolant is frozen when a difference between the second temperature information Te and the first temperature information Ts is equal to or larger than a predetermined value, instead of calculating the thermal resistance Rth1.

As another method for determining that the coolant is frozen, the first temperature information Ts may be calculated from a thermal resistance Rth0 when the coolant of the cooler is melted completely, the energizing current value of the switching elements 5 to 10 at that time, and the second temperature information Te, and it may be determined that the coolant is frozen when a difference between the calculation result and an actual measurement result is equal to or larger than a predetermined value (Yes in S8). In this case, after it is determined that the coolant is frozen, the thermal resistance Rth1 of the cooler is obtained from the energizing current value of the switching elements 5 to 10, the second temperature information Te, and the first temperature information Ts.

When determining that the coolant is frozen (Yes in S8), the control device 11 determines a maximum current value Imax that can be fed through the switching elements from the thermal resistance Rth1 (S9).

When the electric power converting device 1 is stopped while the vehicle is stopped at a station or the like or while the vehicle is traveling but performing coasting operation (Yes in S10), the control device 11 performs a warm-up operation in which the control signal Pi is output so as to energize the switching elements and the heat generation of the switching elements is used to melt the frozen coolant (S11). At this time, the control device 11 controls the energizing current of the switching elements 5 to 10 to be equal to or smaller than the maximum current value Imax.

The control device 11 also controls the energizing current of the switching elements 5 to 10 so as to prevent the vehicle from being accelerated or decelerated even when a current flows through the motor 4. For example, in a case where the three-phase AC motor 4 is an induction motor, the rotational speed of the motor is measured, and the current is controlled such that the slip of the motor is zero. In a case where the three-phase AC motor 4 is a synchronous motor, the position of a rotor of the motor is measured, and the current is controlled such that a d-axis current flows through the motor.

There is also a method that controls the energizing current of the motor 4 such that the torque of the motor 4 is lower than the torque of an air brake, particularly in a state of the air brake operating while the vehicle is stopped at a station or the like. In this case, the control device 11 checks the force of the air brake of the vehicle before energizing the switching elements. Incidentally, when a brake command is not output from a cab (not shown in FIG. 1) of the vehicle, the brake command is output from the control device 11. Confirming the operation of the air brake, the control device 11 calculates a current that can be passed through the motor from the torque of the air brake, compares the calculation result with the maximum current value Imax, and controls the energizing current so as not to exceed the smaller value of the calculation result and the maximum current value Imax.

When the control device 11 determines that all of the coolant frozen during the warm-up operation is melted (Yes in S12), the control device 11 stops the energization of the switching elements to end the warm-up operation (S13) .

On the other hand, in the case of the railway vehicle, an operation command to operate the electric power converting device 1 may be input from the cab of the vehicle to the control device 11 immediately after it is determined that the coolant is frozen or during energization for melting the frozen coolant (No in S10). At this time, when the switching elements are energized, the control device 11 stops the energization of the switching elements.

Next, the control device 11 performs control according to the operation command. Here, when the control device 11 determines that the energizing current of the switching elements exceeds the maximum current value Imax, the control device 11 performs a warm-up operation in which a current command value is limited such that the energizing current of the switching elements is equal to or smaller than the maximum current value Imax (S14). The warm-up operation in which the current command value is limited can be similarly applied to a case where the control device 11 determines that the coolant is frozen while the electric power converting device 1 is operating. When the control device 11 determines that the coolant of the cooler 12 is melted during the warm-up operation (Yes in S15), the warm-up operation is ended by removing the limitation on the current command value (S16), and a transition is made to normal operation.

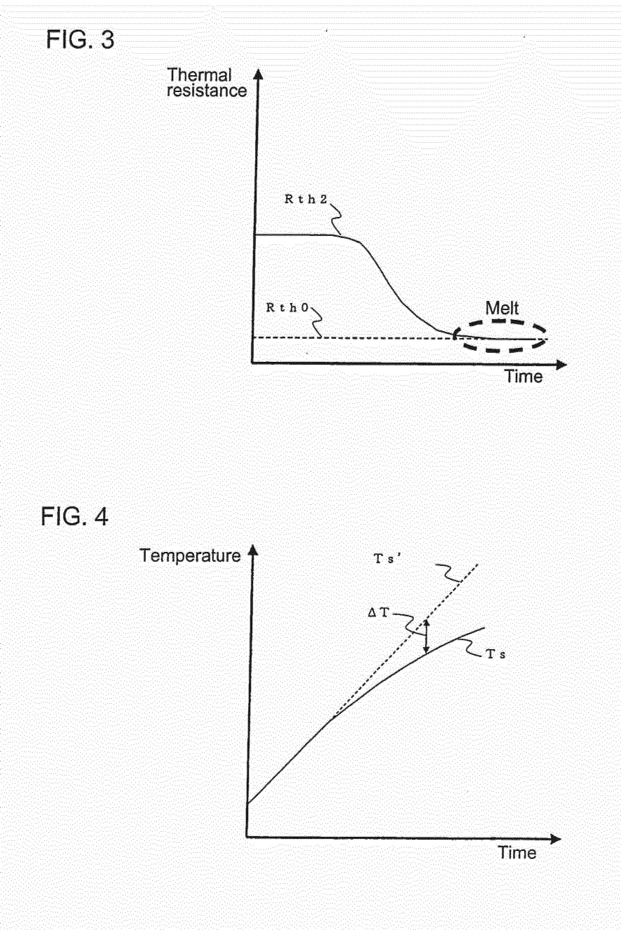

A method of determining that the coolant of the cooler 12 is melted will next be described with reference to FIG. 3. FIG. 3 is a diagram showing temporal changes in thermal resistance. Rth0 denotes a thermal resistance when the coolant is melted completely, which thermal resistance serves as a reference. The control device 11 controls the energizing current of the switching elements 5 to 10 to be constant during the warm-up operation, and obtains the thermal resistance Rth2 of the cooler from the value of the energizing current, the second temperature information Te, and the first temperature information Ts. Here, it is determined that the coolant is melted when the thermal resistance Rth2 becomes equal to the thermal resistance Rth0 when the coolant is melted completely. Incidentally, because the temperature sensors 13 and 14 have measurement errors, it may be determined that the coolant is melted when the thermal resistance Rth2 coincides with the thermal resistance Rth0 within a range of the errors of the temperature sensors 13 and 14 even if the thermal resistance Rth2 does not perfectly coincide with the thermal resistance Rth0. For example, supposing that the temperature sensors have an error of 10%, it is determined that the coolant is melted when the thermal resistance Rth2 becomes the thermal resistance Rth0 ± 10%.

FIG. 4 is a diagram showing temporal changes in the measured value of a temperature sensor. There is a method in which the temperature of the cooler is calculated from a thermal resistance value using this characteristic, and the calculation result is compared with an actual measured value to determine whether the coolant is melted. Also in this case, the energizing current of the switching elements 5 to 10 is controlled to be constant during the warm-up operation. Next, the control device 11 calculates Ts', which is a calculated value of the first temperature information Ts in relation to the second temperature information Te, using the amount of heat generated by the switching elements 5 to 10 and the thermal resistance Rth1 of the cooler 12 which thermal resistance Rth1 is calculated at the time of determining that the coolant is frozen, and compares the calculated value Ts' with an actual measured value of the first temperature information Ts at the same time. Here, when the coolant is melted, the cooling capability of the cooler 12 is improved, so that a temperature rise becomes gentle and the actual measured value of the first temperature information Ts becomes lower than the calculated value Ts'. Accordingly, it is determined that the coolant is melted when a temperature difference ΔT between the calculated value and the actual measured value of the first temperature information Ts becomes equal to or larger than a certain value. When the value of the temperature difference used for this determination is a maximum error temperature of the second temperature sensor, for example, and the temperature difference is equal to or more than the maximum error temperature of the temperature sensor, there is clearly a difference between the calculated value and the measured value, and thus it can determined that the coolant is melted.

Alternatively, there is a method in which whether the coolant is melted is determined from an amount of heat necessary to melt the coolant and the amount of heat generated by the switching elements 5 to 10 in a case where the thermal resistance Rth1 and the thermal resistance Rth0 when the coolant is melted completely are equal to each other. The control device 11 calculates the amount of heat necessary to melt the coolant. This necessary amount of heat is divided into an amount of heat necessary for a temperature rise to the melting point and a heat of fusion. The amount of heat necessary for the temperature rise to the melting point can be calculated from the second temperature information Te or the first temperature information Ts, the melting point, and the specific heat of the coolant. The heat of fusion is determined by the liquid used as the coolant. In addition, the amount of heat generated by the switching elements can be obtained from the energizing current of the switching elements 5 to 10. Then, it is determined that the coolant is melted when the obtained amount of heat generated by the switching elements 5 to 10 becomes larger than the amount of heat necessary to melt the coolant. However, consideration needs to be given to efficiency of heat transfer from the switching elements 5 to 10 to the cooler 12 at this time.

Incidentally, automatic activation of the warm-up operation in the present Embodiment 1 by the control device 11 is assumed. However, the warm-up operation may be allowed to be activated manually by pressing an activation switch within the crew's cab according to a judgment of a crew after the frozen state of the coolant is indicated in the crew's cab.

This method can melt the coolant while preventing a rise in the temperature of the switching elements by the warm-up operation even when the coolant is frozen, and eliminates a need for a cooler hardware design in which consideration is given to cases where the coolant is frozen. It is thereby possible to provide a drive device for cold regions which drive device has a desired cooler without changing the size of the cooler. Incidentally, the present Embodiment 1 is applicable to coolers of a heat pipe type or a water cooling type as long as the coolers use a liquid as a coolant.

### [Embodiment 2]

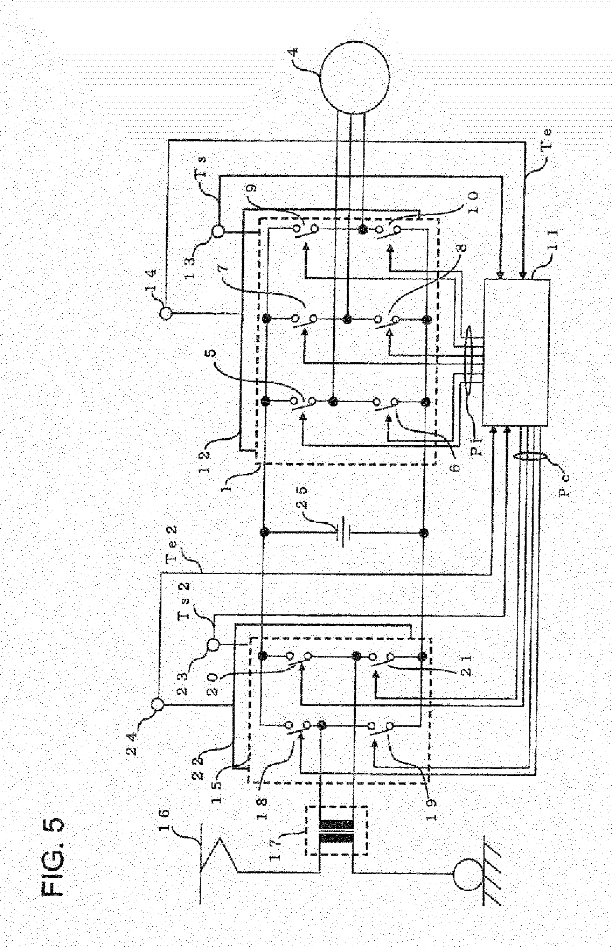

FIG. 5 shows a second embodiment (Embodiment 2) of the drive device according to the present invention. The second embodiment is different from Embodiment 1 in that power supplied from an overhead wire is AC electric power. Incidentally, devices common to FIG. 1 and FIG. 5 are identified by the same reference numerals, and description thereof will be omitted.

An electric power converting device 15 is supplied with single-phase AC electric power from an AC overhead wire 16 via a transformer 17, converts the single-phase AC electric power into DC electric power, and supplies the DC electric power to an electric power converting device 1. In addition, the electric power converting device 15 includes switching elements 18 to 21. Each of the switching elements is individually controlled to be turned on and off by a signal Pc output from a control device 11.

The control device 11 controls both of the electric power converting device 1 and the electric power converting device 15. However, the control device 11 may be divided into a control device for controlling the electric power converting device 1 and a control device for controlling the electric power converting device 15 when the control devices can exchange information by communication.

A cooler 22 uses a liquid as a coolant. The cooler 22 cools the switching elements 18 to 21. A capacitor 25 is installed in a middle portion between the electric power converting devices 15 and 1. The capacitor 25 absorbs an AC component included in a current output from the electric power converting device 15. In addition, a filter circuit formed by a reactor and a capacitor may be installed in the middle portion in addition to the capacitor 25.

A third temperature sensor 23 measures the temperature of the switching elements 18 to 21. The third temperature sensor 23 outputs third temperature information Ts2 of the switching element. A fourth temperature sensor 24 measures the temperature of a heat radiating portion of the cooler, for example an end portion of a heat pipe, a fin, or the like. The fourth temperature sensor 24 outputs fourth temperature information Te2. The third temperature information Ts2 and the fourth temperature information Te2 are input to the control device 11. The temperature measured by the third temperature sensor 23 does not need to be the temperature of the switching elements 18 to 21 as long as the temperature measured by the third temperature sensor 23 is the temperature on the side of a heat receiving portion of the cooler. The temperature measured by the third temperature sensor 23 may be the temperature of the base of the cooler, for example. In addition, as in the case of the electric power converting device 1, a sensor for measuring an outside air temperature for the management of an air conditioner may be substituted for the fourth temperature sensor 24. In this case, commonality can be provided between the temperature sensors 14 and 24.

Here, when the cooler 12 and the cooler 22 have a common heat receiving portion, commonality may be provided between the temperature sensors 13 and 23, and when the cooler 12 and the cooler 22 have a common heat radiating portion, commonality may be provided between the temperature sensors 14 and 24.

An actual flow of operation will next be described. A basic flow of operation is similar to that of Embodiment 1 (FIG. 2).

The control device 11 monitors the temperature information Ts and Ts2 on the heat receiving portion side and the temperature information Te and Te2 on the heat radiating portion side. When at least one of the temperature information Ts and Ts2 and the temperature information Te and Te2 is equal to or lower than the melting point of the coolant used in the coolers 12 and 22, the control device 11 determines that there is a possibility of the coolant being frozen. However, when at least one of the electric power converting device 1 and the electric power converting device 15 is already operating at a point in time that the control device 11 determines that there is a possibility of the coolant being frozen, the coolant may be melted due to heat generated by the operation, and therefore the normal operation is performed first.

At this time, when the coolant is frozen, the performance of the coolers is decreased, and thus the temperature information Ts and Ts2 rises to a temperature higher than when the coolant is melted. Accordingly, a first determination temperature for the first temperature information Ts and a second determination temperature for the third temperature information Ts2 are provided to determine whether the coolant is frozen. When the temperature information Ts and the temperature information Ts2 are both equal to or lower than the respective determination temperatures, the electric power converting device 1 and the electric power converting device 15 continue the normal operation.

When at least one of the pieces of temperature information Ts and Ts2 exceeds the determination temperatures for the respective pieces of temperature information, on the other hand, it is determined that the coolant is frozen. The first determination temperature is preferably a maximum value that can be taken by the first temperature sensor 13 when the electric power converting device 1 operates at a maximum output level in a state of the second temperature information Te being equal to or lower than the melting point of the coolant. The second determination temperature is preferably a maximum value that can be taken by the third temperature sensor 23 when the electric power converting device 15 operates at a maximum output level in a state of the fourth temperature information Te2 being equal to or lower than the melting point of the coolant.

When there is a possibility of the coolant being frozen, the control device 11 energizes the switching elements 5 to 10 and 18 to 21. At this time, the control device 11 obtains the thermal resistance Rth1 of the cooler 12 from the value of energizing current of the switching elements 5 to 10, the second temperature information Te, and the first temperature information Ts. The control device 11 also obtains the thermal resistance Rth4 of the cooler 22 from the value of energizing current of the switching elements 18 to 21, the fourth temperature information Te2, and the third temperature information Ts2.

In addition, the control device 11 determines that the coolant of the cooler 12 is frozen when the thermal resistance Rth1 is higher than a predetermined value, and determines that the coolant of the cooler 22 is frozen when the thermal resistance Rth4 is higher than a predetermined value. At this time, the control device 11 may determine that the coolant of the cooler 12 is frozen when a difference between the second temperature information Te and the first temperature information Ts is equal to or larger than a predetermined value, and determine that the coolant of the cooler 22 is frozen when a difference between the fourth temperature information Te2 and the third temperature information Ts2 is equal to or larger than a predetermined value, instead of calculating the thermal resistances Rth1 and Rth4.

In addition, as in Embodiment 1, the temperature information Ts and Ts2 may be calculated from the thermal resistances of the respective coolers when the coolant of the coolers is melted completely, the respective energizing current values of the switching elements 5 to 10 and 18 to 21 at that time, and the temperature information Te and Te2, and it may be determined that the coolant of the cooler 12 is frozen when a difference between a result of the calculation of the temperature Ts and a result of actual measurement of the temperature Ts is equal to or larger than a certain value, and that the coolant of the cooler 22 is frozen when a difference between a result of the calculation of the temperature Ts2 and a result of actual measurement of the temperature Ts2 is equal to or larger than a certain value. In this case, after it is determined that the coolant is frozen, the thermal resistances of the respective coolers are obtained from the energizing current values of the switching elements cooled by the coolers having the frozen coolant, the temperatures on the heat radiating portion sides of the coolers, and the temperatures on the heat receiving portion sides of the coolers.

When determining that the coolant is frozen, the control device 11 determines a maximum current value Imax that can be fed through the switching elements 5 to 10 from the thermal resistance Rth1, and determines a maximum current value Imax2 that can be fed through the switching elements 18 to 21 from the thermal resistance Rth4.

Here, when the electric power converting devices 1 and 15 are stopped, the control device 11 performs a warm-up operation, which is classified into the following three operation patterns according to the coolers whose coolant is frozen.

### (First Pattern)

When only the coolant of the cooler 12 is frozen, the control device 11 outputs a control signal Pi to the electric power converting device 1 so that the energizing current of the switching elements 5 to 10 is equal to or smaller than the maximum current value Imax, as in Embodiment 1. A manner of energization at this time is similar to that of Embodiment 1. In addition, the control device 11 outputs a control signal Pc to the electric power converting device 15 so that the voltage of the middle portion is constant.

### (Second Pattern)

When only the coolant of the cooler 22 is frozen, the control device 11 outputs a control signal Pi to the electric power converting device 1 so that the energizing current of the switching elements 18 to 21 of the electric power converting device 15 is equal to or smaller than the maximum current value Imax2. A manner of energization is similar to that of Embodiment 1. The control device 11 outputs a control signal Pc to the electric power converting device 15 so that the voltage of the middle portion is constant even when the electric power converting device 1 operates as in the above. In addition, as another method of dealing with the case where only the coolant of the cooler 22 is frozen, only the electric power converting device 15 may be operated. In this case, the load on the electric power converting device 15 is removed. Thus, the control device 11 changes the voltage command value of the electric power converting device 15 in order to feed a current through the switching elements 18 to 21, and outputs the control signal Pc on the basis of the voltage command value to energize the switching elements 18 to 21.

### (Third Pattern)

When the coolant of the coolers 12 and 22 is frozen, the control device 11 calculates the energizing current of the switching elements 5 to 10 when the energizing current of the switching elements 18 to 21 is controlled to be the maximum current value Imax2, and compares a result of the calculation with the maximum current value Imax. When the result of the calculation is smaller than the maximum current value Imax, the control device 11 outputs a control signal Pi similar to that in the case where only the coolant of the cooler 22 is frozen. When the result of the calculation is larger than the maximum current value Imax, the control device 11 outputs a control signal Pi similar to that in the case where only the coolant of the cooler 12 is frozen. The control device 11 outputs a control signal Pc to the electric power converting device 15 so that the voltage of the middle portion is constant.

When the control device 11 determines that the coolant is melted according to the method illustrated in Embodiment 1 in an energized state as described above, the control device 11 stops the energization to end the warm-up operation.

On the other hand, an operation command to operate the electric power converting devices 1 and 15 may be input to the control device 11 immediately after it is determined that the coolant is frozen or during energization for melting the frozen coolant. At this time, when the switching elements are energized, the control device 11 stops the energization of the switching elements 5 to 10 and 18 to 21.

Next, the control device 11 calculates the energizing current 10 of the switching elements 5 to 10 when the energizing current of the switching elements 18 to 21 is controlled to be the maximum current value Imax2, and compares the energizing current 10 with the maximum current value Imax. When the energizing current 10 is smaller than the maximum current value Imax, the control device 11 limits a current command value used at the time of control of the electric power converting device 1 so that the energizing current of the switching elements 5 to 10 is equal to or smaller than the energizing current 10. When the energizing current 10 is larger than the maximum current value Imax, the control device 11 limits the current command value used at the time of control of the electric power converting device 1 so that the energizing current of the switching elements 5 to 10 is equal to or smaller than the maximum current value Imax. The control device 11 controls the electric power converting device 15 so that the voltage of the middle portion is constant irrespective of magnitude relation between the energizing current 10 and the maximum current value Imax.

When the control device 11 determines that the coolant is melted according to the method illustrated in Embodiment 1, the control device 11 ends the warm-up operation that limits the current command value, and makes a transition to normal operation.

Incidentally, automatic activation of the warm-up operation in the present Embodiment 2 by the control device 11 is assumed. However, the warm-up operation may be allowed to be activated manually by pressing an activation switch within the crew's cab according to a judgment of a crew after the frozen state of the coolant is indicated in the crew's cab.

This method can melt the coolant while preventing a rise in the temperature of the switching elements by the warm-up operation even when the coolant is frozen, and eliminates a need for a cooler hardware design in which consideration is given to cases where the coolant is frozen. It is thereby possible to provide a drive device for cold regions which drive device has a desired cooler without changing the size of the cooler. Incidentally, the present Embodiment 2 is applicable to coolers of a heat pipe type or a water cooling type as long as the coolers use a liquid as a coolant.

### [Embodiment 3]

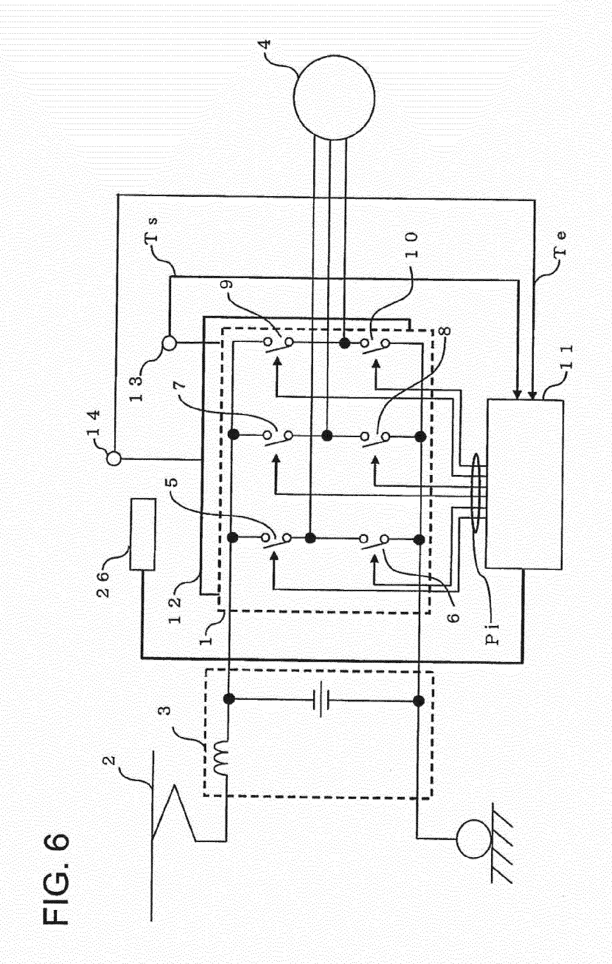

FIG. 6 shows a third embodiment (Embodiment 3) of the drive device according to the present invention. The third embodiment is different from Embodiment 1 in that the third embodiment includes a fan for sending air to the heat radiating portion of a cooler. Incidentally, devices common to FIG. 1 and FIG. 6 are identified by the same reference numerals, and description thereof will be omitted. In the present Embodiment 3, an electric power converting device 1 is supplied with DC electric power from a DC overhead wire 2 via a filter. However, as in Embodiment 2, the electric power converting device 1 may be supplied with AC electric power from an AC overhead wire via a transformer and an electric power converting device.

A fan 26 plays a role of sending air to the heat radiating portion of a cooler 12. The fan 26 is controlled to be turned on and off by a control device 11. When an electric power converting device for converting AC electric power to DC electric power and a cooler for the electric power converting device are provided as in Embodiment 2, each cooler may be provided with a fan, or the heat radiating portions of both coolers may be supplied with air by one fan. In addition, because the role of the fan 26 is to supply air to the heat radiating portion of the cooler 12, a blower may be used in place of the fan.

The control device 11 stops the fan 26 when determining that the coolant of the cooler 12 is frozen according to the method illustrated in Embodiment 1 or Embodiment 2. When there are a plurality of coolers, the control device 11 stops all of the fans when determining that the coolant of at least one cooler is frozen according to the method illustrated in Embodiment 1 or Embodiment 2. This is because effect of warm-up operation is reduced when the performance of the cooler 12 is increased by the fan during the warm-up operation. After the coolant of the cooler 12 is melted and the warm-up operation is ended, the control device 11 resumes driving the fan.

Incidentally, when the electric power converting device is stopped, the fan may be stopped on a temporary basis at a point in time that the control device 11 determines that there is a possibility of the coolant being frozen. In this case, the fan may continue to be stopped as it is when it is determined that the coolant is frozen on the basis of measurement of thermal resistance, and the fan may be driven again when it is determined that the coolant is melted.

This method enables warm-up operation when the coolant is frozen even in the cooler having a forced air cooling system, and thus eliminates a need for a cooler hardware design in which consideration is given to cases where the coolant is frozen. It is thereby possible to provide a drive device for cold regions which drive device has a desired cooler without changing the size of the cooler. Incidentally, the present Embodiment 3 is applicable to coolers of a heat pipe type or a water cooling type as long as the coolers use a liquid as a coolant.

### [Embodiment 4]

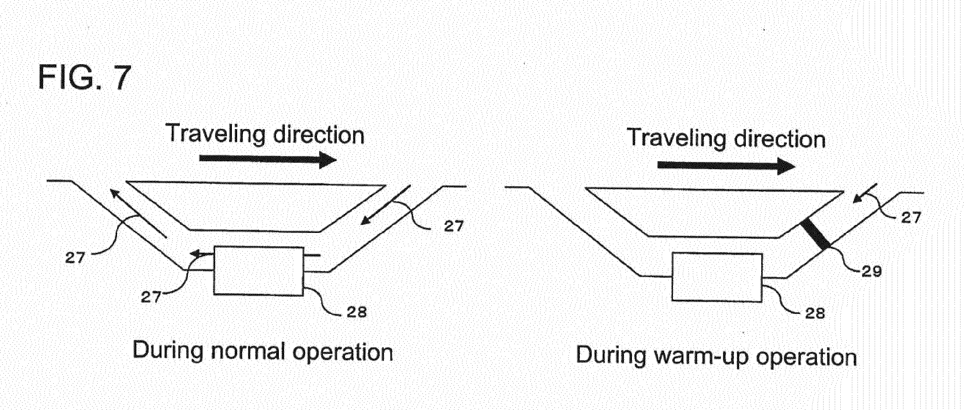

FIG. 7 shows a fourth embodiment (Embodiment 4) of the drive device according to the present invention. At a time of normal traveling, a traveling wind 27 is taken in from an inlet port during the traveling of a vehicle, and the traveling wind is supplied to a heat radiating portion 28 of a cooler. The heat radiating portion 28 may belong to one cooler, or may belong to a plurality of coolers.

When the control device (not shown in FIG. 7) of the vehicle confirms that the coolant of a cooler 12 is frozen and thus determines that warm-up operation is necessary while the vehicle is traveling, the control device closes a ventilation duct by operating a ventilation valve 29 so that the traveling wind is not supplied to the heat radiating portion 28. The control device opens the ventilation valve 29 when determining that the coolant is melted and returning to normal operation.

Incidentally, in the present Embodiment 4, only the ventilation valve near the inlet port through which the traveling wind enters is operated. However, considering that the vehicle also travels in an opposite direction, it is necessary to also install a ventilation valve near an inlet port on the opposite side. Therefore, both of the ventilation valves may be operated when the coolant is frozen.

This method can prevent the coolant from being refrozen due to the effect of the traveling wind when warm-up operation is performed in the cooler having a traveling wind cooling system using a duct during traveling. Incidentally, the present Embodiment 4 is applicable to coolers of a heat pipe type or a water cooling type as long as the coolers use a liquid as a coolant.

## Claims

1. A drive device for a railway vehicle, the drive device comprising:
a first electric power converting device (1) formed by a switching element (5-10) to convert DC electric power into AC electric power and supply the AC electric power to a load;
a control device (11) for controlling the first electric power converting device; and
a first cooler (12) using a liquid as a coolant for cooling the first electric power converting device;
wherein the first cooler includes
a heat receiving portion in contact with the switching element, the heat receiving portion absorbing heat of the switching element,
a heat receiving portion temperature (13) sensor for measuring a temperature of the heat receiving portion,
a heat radiating portion for radiating the heat absorbed from the switching element, and
a heat radiating portion temperature sensor (14) for measuring a temperature of the heat radiating portion, and
the control device includes an arithmetic section for determining whether the coolant is frozen from a magnitude of a thermal resistance value of the first cooler, the magnitude of the thermal resistance value of the first cooler being calculated using the detected respective measured values of the heat receiving portion temperature sensor and the heat radiating portion temperature sensor, the measured values being detected by feeding a predetermined current through the switching element, and an amount of heat generated by the switching element or an energizing current value corresponding to the amount of heat generated by the switching element, when at least one of the respective measured values of the heat receiving portion temperature sensor and the heat radiating portion temperature sensor becomes equal to or lower than a melting point of the coolant.

2. The drive device for the railway vehicle according to claim 1,
wherein the temperature of the heat receiving portion is a temperature of the switching element or a temperature of a base of the first cooler, the base of the first cooler constituting a base material of the heat receiving portion, and
the temperature of the heat radiating portion is a temperature of a fin of the first cooler, a temperature of an end portion of a heat pipe used in the first cooler, or an outside air temperature.

3. The drive device for the railway vehicle according to claim 1 or claim 2,
wherein the arithmetic section calculates a maximum value of energizing current that can be fed through the switching element from the thermal resistance value when the arithmetic section determines that the coolant is frozen.

4. The drive device for the railway vehicle according to claim 3,
wherein in a case where the first electric power converting device is stopped when the determination is made, the control device performs a warm-up operation that makes the switching element generate heat to melt the frozen coolant, by controlling the energizing current of the switching element so as not to exceed the maximum value.

5. The drive device for the railway vehicle according to claim 3,
wherein in a case where the first electric power converting device is not stopped when the determination is made, the control device performs a warm-up operation that limits the energizing current of the switching element to the maximum value or smaller.

6. The drive device for the railway vehicle according to claim 5,
wherein when the load is an AC motor (4), the control device controls the energizing current of the switching element such that torque produced by the AC motor does not accelerate or decelerate the vehicle.

7. The drive device for the railway vehicle according to claim 5,
wherein when the load is an AC motor and an air brake of the vehicle is operating, the control device controls the energizing current of the switching element such that torque produced by the AC motor is lower than torque of the air brake.

8. The drive device for the railway vehicle according to any one of claims 4 to 7,
wherein the arithmetic section calculates the thermal resistance value of the first cooler during the warm-up operation, and ends the warm-up operation by determining that the coolant is melted when a difference between the calculated thermal resistance value and a thermal resistance value when the coolant is melted completely becomes equal to or smaller than a predetermined value.

9. The drive device for the railway vehicle according to any one of claims 4 to 7,
wherein the arithmetic section calculates the temperature of the heat receiving portion during the warm-up operation from the amount of heat generated by the switching element during the warm-up operation, the thermal resistance value of the first cooler when the arithmetic section determines that the coolant is frozen, and the measured value of the heat radiating portion temperature sensor, and ends the warm-up operation by determining that the coolant is melted when a difference between the calculated temperature of the heat receiving portion and the measured value of the heat receiving portion temperature sensor becomes equal to or larger than a predetermined value.

10. The drive device for the railway vehicle according to any one of claims 4 to 7,
wherein the arithmetic section calculates an amount of heat necessary to melt the coolant and calculates the amount of heat generated by the switching element from the energizing current of the switching element during the warm-up operation, and ends the warm-up operation by determining that the coolant is melted when the amount of heat generated by the switching element exceeds the amount of heat necessary to melt the coolant.

11. The drive device for the railway vehicle according to claim 1 or 2, further comprising:
a second electric power converting device (15) formed by a switching element (18-21) to convert AC electric power supplied from an AC overhead wire into DC electric power and supply the DC electric power to the first electric power converting device; and
a second cooler (22) using a liquid as a coolant for cooling the second electric power converting device;
wherein the second cooler includes
a heat receiving portion in contact with the switching element, the heat receiving portion absorbing heat of the switching element,
a heat receiving portion temperature sensor (23) for measuring a temperature of the heat receiving portion,
a heat radiating portion for radiating the heat absorbed from the switching element, and
a heat radiating portion temperature sensor (24) for measuring a temperature of the heat radiating portion,
the control device controls the first electric power converting device and the second electric power converting device, and
the control device includes an arithmetic section, wherein,
when at least one of states occurs, the states being a state of at least one of the respective measured values of the heat receiving portion temperature sensor and the heat radiating portion temperature sensor of the first cooler becoming equal to or lower than a melting point of the coolant of the first cooler, and a state of at least one of the respective measured values of the heat receiving portion temperature sensor and the heat radiating portion temperature sensor of the second cooler becoming equal to or lower than the melting point of the coolant of the second cooler,
the arithmetic section determines whether the coolant of the first cooler is frozen on a basis of respective measured values of the heat receiving portion temperature sensor and the heat radiating portion temperature sensor of the first cooler and whether the coolant of the second cooler is frozen on a basis of respective measured values of the heat receiving portion temperature sensor and the heat radiating portion temperature sensor of the second cooler, the measured values being detected by feeding a predetermined current through the respective switching elements of the first electric power converting device and the second electric power converting device.

12. The drive device for the railway vehicle according to claim 11,
wherein the arithmetic section makes at least one of a determination of whether the coolant of the first cooler is frozen from a magnitude of a thermal resistance of the first cooler, the magnitude of the thermal resistance of the first cooler being calculated using the respective measured values of the heat receiving portion temperature sensor and the heat radiating portion temperature sensor of the first cooler and an amount of heat generated by the switching element of the first electric power converting device or an energizing current value corresponding to the amount of heat generated by the switching element of the first electric power converting device, and a determination of whether the coolant of the second cooler is frozen from a magnitude of a thermal resistance of the second cooler, the magnitude of the thermal resistance of the second cooler being calculated using the respective measured values of the heat receiving portion temperature sensor and the heat radiating portion temperature sensor of the second cooler and an amount of heat generated by the switching element of the second electric power converting device or an energizing current value corresponding to the amount of heat generated by the switching element of the second electric power converting device.

13. The drive device for the railway vehicle according to any one of the previous claims,
wherein a fan (26) or a blower for supplying air to: the heat radiating portions of the first cooler is provided, or at least one of the respective heat radiating portions of the first cooler and the second cooler is provided, and
when the control device, upon determining that: the coolant of the first cooler is frozen, or at least one of the respective coolants of the first cooler and the second cooler is frozen, performs a warm-up operation, the control device stops the fan or the blower entirely.

14. The drive device for the railway vehicle according to any one of the previous claims,
wherein the control device is provided to the vehicle having a ventilation duct for supplying a traveling wind to: the heat radiating portions of the first cooler, or at least one of the respective heat radiating portions of the first cooler and the second cooler, and
when the control device, upon determining that: the coolant of the first cooler is frozen, or at least one of the respective coolants of the first cooler and the second cooler is frozen, performs a warm-up operation, the control device closes the ventilation duct.

## Patentansprüche

1. Antriebsvorrichtung für ein Schienenfahrzeug, wobei die Antriebsvorrichtung Folgendes umfasst:
eine erste elektrische Leistungswandlervorrichtung (1), die durch ein Schaltelement (5-10) gebildet wird, um elektrische Gleichstromleistung in elektrische Wechselstromleistung umzuwandeln und die elektrische Wechselstromleistung einer Last zuzuführen;
eine Steuervorrichtung (11) zum Steuern der ersten elektrischen Leistungswandlervorrichtung und
einen ersten Kühler (12), der eine Flüssigkeit als Kühlmittel zum Kühlen der ersten elektrischen Leistungswandlervorrichtung verwendet;
wobei der erste Kühler Folgendes umfasst:
einen Wärmeaufnahmeabschnitt, der mit dem Schaltelement in Kontakt steht, wobei der Wärmeaufnahmeabschnitt Wärme des Schaltelements absorbiert,
einen Wärmeaufnahmeabschnitttemperatursensor (13) zum Messen der Temperatur des Wärmeaufnahmeabschnitts,
einen Wärmeabstrahlungsabschnitt zum Abstrahlen der von dem Schaltelement ausgehenden absorbierten Wärme und
einen Wärmeabstrahlungsabschnitttemperatursensor (14) zum Messen der Temperatur des Wärmeabstrahlungsabschnitts, und
wobei die Steuervorrichtung einen arithmetischen Abschnitt umfasst, um zu bestimmen, ob das Kühlmittel gefroren ist, anhand der Größe des Wärmewiderstandswerts des ersten Kühlers, wobei die Größe des Wärmewiderstandswerts des ersten Kühlers unter Verwendung der detektierten entsprechenden Messwerte des Wärmeaufnahmeabschnitttemperatursensors und des Wärmeabstrahlungsabschnitttemperatursensors berechnet wird, wobei die Messwerte detektiert werden, indem ein vorbestimmter Strom durch das Schaltelement geleitet wird und eine durch das Schaltelement erzeugte Wärmemenge oder ein der durch das Schaltelement erzeugten Wärmemenge entsprechender Erregerstrom detektiert wird, wenn zumindest einer der jeweiligen Messwerte des Wärmeaufnahmeabschnitttemperatursensors und des Wärmeabstrahlungsabschnitttemperatursensors einem Schmelzpunkt des Kühlmittels entspricht oder unter diesem liegt.

2. Antriebsvorrichtung für das Schienenfahrzeug nach Anspruch 1,
wobei die Temperatur des Wärmeaufnahmeabschnitts eine Temperatur des Schaltelements oder eine Temperatur einer Basis des ersten Kühlers ist, wobei die Basis des ersten Kühlers ein Basismaterial des Wärmeaufnahmeabschnitts bildet, und
die Temperatur des Wärmeabstrahlungsabschnitts eine Temperatur einer Rippe des ersten Kühlers, eine Temperatur eines Endabschnitts eines in dem ersten Kühler verwendeten Wärmerohrs oder eine Außenlufttemperatur ist.

3. Antriebsvorrichtung für das Schienenfahrzeug nach Anspruch 1 oder 2,
wobei der arithmetische Abschnitt anhand des Wärmewiderstandswerts einen Maximalwert des Erregerstroms berechnet, der durch das Schaltelement geleitet werden kann, wenn der arithmetische Abschnitt feststellt, dass das Kühlmittel gefroren ist.

4. Antriebsvorrichtung für das Schienenfahrzeug nach Anspruch 3,
wobei in einem Fall, wenn die erste elektrische Leistungswandlervorrichtung während der Bestimmung angehalten wird, die Steuervorrichtung einen Aufwärmvorgang durchführt, durch den das Schaltelement Wärme erzeugt, um das gefrorene Kühlmittel zu schmelzen, indem der Erregerstrom des Schaltelements so gesteuert wird, dass er den Maximalwert nicht überschreitet.

5. Antriebsvorrichtung für das Schienenfahrzeug nach Anspruch 3,
wobei in einem Fall, wenn die erste elektrische Leistungswandlervorrichtung während der Bestimmung nicht angehalten wird, die Steuervorrichtung einen Aufwärmvorgang durchführt, der den Erregerstrom des Schaltelements auf den Maximalwert oder einen geringeren Wert begrenzt.

6. Antriebsvorrichtung für das Schienenfahrzeug nach Anspruch 5,
wobei, wenn es sich bei der Last um einen Wechselstrommotor (4) handelt, die Steuervorrichtung den Erregerstrom des Schaltelements so steuert, dass das durch den Wechselstrommotor erzeugte Drehmoment das Fahrzeug weder beschleunigt noch verlangsamt.

7. Antriebsvorrichtung für das Schienenfahrzeug nach Anspruch 5,
wobei, wenn es sich bei der Last um einen Wechselstrommotor handelt und eine Luftbremse des Fahrzeugs bedient wird, die Steuervorrichtung den Erregerstrom des Schaltelements so steuert, dass das durch den Wechselstrommotor erzeugte Drehmoment geringer ist als das Drehmoment der Luftbremse.

8. Antriebsvorrichtung für das Schienenfahrzeug nach einem der Ansprüche 4 bis 7,
wobei der arithmetische Abschnitt den Wärmewiderstandswert des ersten Kühlers während des Aufwärmvorgangs berechnet und den Aufwärmvorgang beendet, indem festgestellt wird, dass das Kühlmittel geschmolzen ist, wenn eine Differenz zwischen dem berechneten Wärmewiderstandswert und einem Wärmewiderstandswert nach vollständigem Schmelzen des Kühlmittels einem vorbestimmten Wert entspricht oder geringer als dieser ist.

9. Antriebsvorrichtung für das Schienenfahrzeug nach einem der Ansprüche 4 bis 7,
wobei der arithmetische Abschnitt die Temperatur des Wärmeaufnahmeabschnitts während des Aufwärmvorgangs anhand einer durch das Schaltelement während des Aufwärmvorgangs erzeugten Wärmemenge, des Wärmewiderstandswerts des ersten Kühlers, wenn der arithmetische Abschnitt feststellt, dass das Kühlmittel gefroren ist, und des Messwerts des Wärmeabstrahlungstemperatursensors berechnet und den Aufwärmvorgang beendet, indem ermittelt wird, dass das Kühlmittel geschmolzen ist, wenn eine Differenz zwischen der berechneten Temperatur des Wärmeaufnahmeabschnitts und dem Messwert des Wärmeaufnahmeabschnittstemperatursensors einem vorbestimmten Wert entspricht oder geringer als dieser ist.

10. Antriebsvorrichtung für das Schienenfahrzeug nach einem der Ansprüche 4 bis 7,
wobei der arithmetische Abschnitt eine Wärmemenge berechnet, die erforderlich ist, um das Kühlmittel zu schmelzen, und die durch das Schaltelement ausgehend von dem Erregerstrom des Schaltelements während des Aufwärmvorgangs erzeugte Wärmemenge berechnet und den Aufwärmvorgang beendet, indem festgestellt wird, dass das Kühlmittel geschmolzen ist, wenn die durch das Schaltelement erzeugte Wärmemenge höher ist als die für das Schmelzen des Kühlmittels erforderliche Wärmemenge.

11. Antriebsvorrichtung für ein Schienenfahrzeug nach Anspruch 1 oder 2, wobei die Antriebsvorrichtung ferner Folgendes umfasst:
eine zweite elektrische Leistungswandlervorrichtung (15), die durch ein Schaltelement (18-21) gebildet wird, um elektrische Wechselstromleistung von einer Wechselstromoberleitung in elektrische Gleichstromleistung umzuwandeln und die elektrische Gleichstromleistung der ersten elektrischen Leistungswandlervorrichtung zuzuführen; und
einen zweiten Kühler (22), der eine Flüssigkeit als Kühlmittel zum Kühlen der zweiten elektrischen Leistungswandlervorrichtung verwendet;
wobei der zweite Kühler Folgendes umfasst:
einen Wärmeaufnahmeabschnitt, der mit dem Schaltelement in Kontakt steht, wobei der Wärmeaufnahmeabschnitt Wärme des Schaltelements absorbiert,
einen Wärmeaufnahmeabschnitttemperatursensor (23) zum Messen der Temperatur des Wärmeaufnahmeabschnitts,
einen Wärmeabstrahlungsabschnitt zum Abstrahlen der von dem Schaltelement ausgehenden absorbierten Wärme und
einen Wärmeabstrahlungsabschnitttemperatursensor (24) zum Messen der Temperatur des Wärmeabstrahlungsabschnitts, und
wobei die Steuervorrichtung die erste elektrische Leistungswandlervorrichtung und die zweite elektrische Leistungswandlervorrichtung steuert,
wobei die Steuervorrichtung einen arithmetischen Abschnitt umfasst,
wobei,
wenn zumindest einer der Zustände eintritt, wobei es sich bei den Zuständen um folgende handelt: einen Zustand, in dem zumindest einer der jeweiligen Messwerte des Wärmeaufnahmeabschnitttemperatursensors und des Wärmeabstrahlungstemperatursensors des ersten Kühlers gleich einem Schmelzpunkt des Kühlmittels des ersten Kühlers sind oder darunter liegen, und einen Zustand, in dem zumindest einer der jeweiligen Messwerte des Wärmeaufnahmeabschnitttemperatursensors und des Wärmeabstrahlungstemperatursensors des zweiten Kühlers einem Schmelzpunkt des Kühlmittels des zweiten Kühlers entsprechen oder darunter liegen,
der arithmetische Abschnitt auf Grundlage entsprechender Messwerte des Wärmeaufnahmeabschnitttemperatursensors und des Wärmeabstrahlungstemperatursensors des ersten Kühlers ermittelt, ob das Kühlmittel des ersten Kühlers gefroren ist, und auf Grundlage entsprechender Messwerte des Wärmeaufnahmeabschnitttemperatursensors und des Wärmeabstrahlungstemperatursensors des zweiten Kühlers ermittelt, ob das Kühlmittel des zweiten Kühlers gefroren ist, wobei die Messwerte durch das Einspeisen eines vorbestimmten Stroms durch die entsprechenden Schaltelemente der ersten elektrischen Leistungswandlervorrichtung und der zweiten elektrischen Leistungswandlervorrichtung detektiert werden.

12. Antriebsvorrichtung für das Schienenfahrzeug nach Anspruch 11,
wobei der arithmetische Abschnitt zumindest eine Bestimmung durchführt von der Bestimmung, ob das Kühlmittel des ersten Kühlers gefroren ist, anhand der Größe des Wärmewiderstands des ersten Kühlers, der unter Verwendung der entsprechenden Messwerte des Wärmeaufnahmeabschnitttemperatursensors und des Wärmeabstrahlungstemperatursensors des ersten Kühlers und einer durch das Schaltelement der ersten elektrischen Leistungswandlervorrichtung erzeugten Wärmemenge oder eines Erregerstromwerts, der der durch das Schaltelement der ersten elektrischen Leistungswandlervorrichtung erzeugten Wärmemenge entspricht, berechnet wird, und der Bestimmung, ob das Kühlmittel des zweiten Kühlers gefroren ist, anhand der Größe des Wärmewiderstands des zweiten Kühlers, wobei die Größe des Wärmewiderstands des zweiten Kühlers unter Verwendung der entsprechenden Messwerte des Wärmeaufnahmeabschnitttemperatursensors und des Wärmeabstrahlungstemperatursensors des zweiten Kühlers und einer durch das Schaltelement der zweiten elektrischen Leistungswandlervorrichtung erzeugten Wärmemenge oder eines Erregerstromwerts, der der durch das Schaltelement der zweiten elektrischen Leistungswandlervorrichtung erzeugten Wärmemenge entspricht, berechnet wird.

13. Antriebsvorrichtung für das Schienenfahrzeug nach einem der vorangegangenen Ansprüche,
wobei ein Lüfter (26) oder Gebläse für die Zufuhr von Luft zu den Wärmeabstrahlungsabschnitten des ersten Kühlers oder zu zumindest einem der jeweiligen Wärmeabstrahlungsabschnitte des ersten Kühlers und des zweiten Kühlers bereitgestellt ist und
wobei, wenn die Steuervorrichtung, wenn festgestellt wird, dass das Kühlmittel des ersten Kühlers gefroren ist oder zumindest eines der Kühlmittel von erstem und zweitem Kühler gefroren ist, einen Aufwärmvorgang durchführt, die Steuervorrichtung den Lüfter oder das Gebläse vollständig anhält.

14. Antriebsvorrichtung für das Schienenfahrzeug nach einem der vorangegangenen Ansprüche,
wobei die Steuervorrichtung an dem Fahrzeug bereitgestellt ist, das eine Belüftungsleitung für die Zufuhr von Fahrtwind zu den Wärmeabstrahlungsabschnitten des ersten Kühlers oder zumindest einem der jeweiligen Wärmeabstrahlungsabschnitte des ersten und des zweiten Kühlers aufweist, und
wenn die Steuervorrichtung, wenn festgestellt wird, dass das Kühlmittel des ersten Kühlers gefroren ist oder zumindest eines der jeweiligen Kühlmittel von erstem und zweitem Kühler gefroren ist, einen Aufwärmvorgang durchführt, die Steuervorrichtung die Belüftungsleitung schließt.

## Revendications

1. Dispositif de commande pour véhicule ferroviaire, le dispositif de commande comprenant :
un premier dispositif de conversion d'alimentation électrique (1) formé par un élément de commutation (5-10) pour convertir une alimentation électrique CC en alimentation électrique CA et fournir l'alimentation électrique CA à une charge ;
un dispositif de contrôle (11) pour contrôler le premier dispositif de conversion d'alimentation électrique ; et
un premier refroidisseur (12) utilisant un liquide comme un liquide de refroidissement pour refroidir le premier dispositif de conversion d'alimentation électrique ;
dans lequel le premier refroidisseur comporte
une partie de réception de chaleur en contact avec l'élément de commutation, la partie de réception de chaleur absorbant la chaleur de l'élément de commutation,
un capteur de température de partie de réception de chaleur (13) pour mesurer une température de la partie de réception de chaleur,
une partie de rayonnement de chaleur pour rayonner la chaleur absorbée à partir de l'élément de commutation, et
un capteur de température de partie de rayonnement de chaleur (14) pour mesurer une température de la partie de rayonnement de chaleur, et
le dispositif de contrôle comporte une section arithmétique pour déterminer si le liquide de refroidissement est congelé à partir d'une grandeur d'une valeur de résistance thermique du premier refroidisseur, la grandeur de la valeur de résistance thermique du premier refroidisseur étant calculée au moyen des valeurs mesurées respectives détectées du capteur de température de partie de réception de chaleur et du capteur de température de partie de rayonnement de chaleur, les valeurs mesurées étant détectées en fournissant un courant prédéterminé par le biais de l'élément de commutation, et une quantité de chaleur générée par l'élément de commutation ou une valeur de courant d'excitation correspondant à la quantité de chaleur générée par l'élément de commutation, lorsqu'au moins une des valeurs mesurées respectives du capteur de température de partie de réception de chaleur et du capteur de température de partie de rayonnement de chaleur devient inférieure ou égale à un point de fusion du liquide de refroidissement.

2. Dispositif de commande pour véhicule ferroviaire selon la revendication 1,
dans lequel la température de la partie de réception de chaleur est une température de l'élément de commutation ou une température d'une base du premier refroidisseur, la base du premier refroidisseur constituant un matériau de base de la partie de réception de chaleur, et
la température de la partie de rayonnement de chaleur est une température d'une ailette du premier refroidisseur, une température d'une partie terminale d'un tuyau de chaleur dans le premier refroidisseur, ou une température d'air extérieur.

3. Dispositif de commande pour véhicule ferroviaire selon la revendication 1 ou la revendication 2,
dans lequel la section arithmétique calcule une valeur maximale de courant d'excitation qui peut être fournie par l'intermédiaire de l'élément de communication à partir de la valeur de résistance thermique lorsque la section arithmétique détermine que le liquide de refroidissement est congelé.

4. Dispositif de commande pour véhicule ferroviaire selon la revendication 3,
dans lequel dans un cas où le premier dispositif de conversion d'alimentation électrique est arrêté lorsque la détermination est réalisée, le dispositif de contrôle effectue une opération de réchauffement qui amène l'élément de commutation à générer de la chaleur pour faire fondre le liquide de refroidissement congelé, en contrôlant le courant d'excitation de l'élément de commutation de sorte qu'il ne dépasse pas la valeur maximale.

5. Dispositif de commande pour véhicule ferroviaire selon la revendication 3,
dans lequel dans un cas où le premier dispositif de conversion d'alimentation électrique n'est pas arrêté lorsque la détermination est réalisée, le dispositif de contrôle effectue une opération de réchauffement qui limite le courant d'excitation de l'élément de commutation à la valeur maximale ou à une valeur inférieure.

6. Dispositif de commande pour véhicule ferroviaire selon la revendication 5,
dans lequel lorsque la charge est un moteur CA (4), le dispositif de contrôle contrôle le courant d'excitation de l'élément de commutation de telle sorte que le couple produit par le moteur CA n'accélère ni ne décélère le véhicule.

7. Dispositif de commande pour véhicule ferroviaire selon la revendication 5,
dans lequel lorsque la charge est un moteur CA et qu'un aérofrein du véhicule est actionné, le dispositif de contrôle contrôle le courant d'excitation de l'élément de commutation de telle sorte que le couple produit par le moteur CA est inférieur au couple de l'aérofrein.

8. Dispositif de commande pour véhicule ferroviaire selon l'une quelconque des revendications 4 à 7,
dans lequel la section arithmétique calcule la valeur de résistance thermique du premier refroidisseur pendant l'opération de réchauffement, et termine l'opération de réchauffement en déterminant que le liquide de refroidissement est fondu lorsqu'une différence entre la valeur de résistance thermique calculée et une valeur de résistance thermique lorsque le liquide de refroidissement est fondu complètement devient inférieure ou égale à une valeur prédéterminée.

9. Dispositif de commande pour véhicule ferroviaire selon l'une quelconque des revendications 4 à 7,
dans lequel la section arithmétique calcule la température de la partie de réception de chaleur pendant l'opération de réchauffement à partir de la quantité de chaleur générée par l'élément de commutation pendant l'opération de réchauffement, la valeur de résistance thermique du premier refroidisseur lorsque la section arithmétique détermine que le liquide de refroidissement est congelé, et la valeur mesurée du capteur de température de partie de rayonnement de chaleur, et termine l'opération de réchauffement en déterminant que le liquide de refroidissement est fondu lorsqu'une différence entre la température calculée de la partie de réception de chaleur et la valeur mesurée du capteur de température de partie de réception de chaleur devient supérieure ou égale à une valeur prédéterminée.

10. Dispositif de commande pour véhicule ferroviaire selon l'une quelconque des revendications 4 à 7,
dans lequel la section arithmétique calcule une quantité de chaleur nécessaire pour faire fondre le liquide de refroidissement et calcule la quantité de chaleur générée par l'élément de commutation à partir du courant d'excitation de l'élément de commutation pendant l'opération de réchauffement, et termine l'opération de réchauffement en déterminant que le liquide de refroidissement est fondu lorsque la quantité de chaleur générée par l'élément de commutation dépasse la quantité de chaleur nécessaire pour faire fondre le liquide de refroidissement.

11. Dispositif de commande pour véhicule ferroviaire selon la revendication 1 ou 2, comprenant en outre :
un second dispositif de conversion d'alimentation électrique (15) formé par un élément de commutation (18-21) pour convertir une alimentation électrique CA fournie par un fil aérien de CA en une alimentation électrique CC et fournir l'alimentation électrique CC au premier dispositif de conversion d'alimentation électrique ; et
un second refroidisseur (22) utilisant un liquide comme un liquide de refroidissement pour refroidir le second dispositif de conversion d'alimentation électrique ;
dans lequel le second refroidisseur comporte
une partie de réception de chaleur en contact avec l'élément de commutation, la partie de réception de chaleur absorbant la chaleur de l'élément de commutation,
un capteur de température de partie de réception de chaleur (23) pour mesurer une température de la partie de réception de chaleur,
une partie de rayonnement de chaleur pour rayonner la chaleur absorbée à partir de l'élément de commutation, et
un capteur de température de partie de rayonnement de chaleur (24) pour mesurer une température de la partie de rayonnement de chaleur,
le dispositif de contrôle contrôle le premier dispositif de conversion d'alimentation électrique et le second dispositif de conversion d'alimentation électrique, et
le dispositif de contrôle comporte une section arithmétique, dans lequel,
lorsqu'au moins un des états se produit, les états étant un état d'au moins une des valeurs mesurées respectives du capteur de température de partie de réception de chaleur et du capteur de température de partie de rayonnement de chaleur du premier refroidisseur devenant inférieur ou égal à un point de fusion du liquide de refroidissement du premier refroidisseur, et un état d'au moins une des valeurs mesurées respectives du capteur de température de partie de réception de chaleur et du capteur de température de partie de rayonnement de chaleur du second refroidisseur devenant inférieur ou égal au point de fusion du liquide de refroidissement du second refroidisseur,
la section arithmétique détermine si le liquide de refroidissement du premier refroidisseur sur une base de valeurs mesurées respectives du capteur de température de partie de réception de chaleur et du capteur de température de partie de rayonnement de chaleur du premier refroidisseur et si le liquide de refroidissement du second refroidisseur est congelé sur une base de valeurs mesurées respectives du capteur de température de partie de réception de chaleur et du capteur de température de partie de rayonnement de chaleur du second refroidisseur, les valeurs mesurées étant détectées en fournissant un courant prédéterminé par le biais des éléments de commutation respectifs du premier dispositif de conversion d'alimentation électrique et du second dispositif de conversion d'alimentation électrique.

12. Dispositif de commande pour véhicule ferroviaire selon la revendication 11,
dans lequel la section arithmétique réalise au moins une d'une détermination du fait que le liquide de refroidissement du premier refroidisseur est congelé à partir d'une grandeur d'une résistance thermique du premier refroidisseur, la grandeur de la résistance thermique du premier refroidisseur étant calculée au moyen des valeurs mesurées respectives du capteur de température de partie de réception de chaleur et du capteur de température de partie de rayonnement de chaleur du premier refroidisseur et d'une quantité de chaleur générée par l'élément de commutation du premier dispositif de conversion d'alimentation électrique ou d'une valeur courante correspondant à la quantité de chaleur générée par l'élément de commutation du premier dispositif de conversion d'alimentation électrique, et une détermination du fait que le liquide de refroidissement du second refroidisseur est congelé à partir d'une grandeur d'une résistance thermique du second refroidisseur, la grandeur de la résistance thermique du second refroidisseur étant calculée au moyen des valeurs mesurées respectives du capteur de température de partie de rayonnement de chaleur du second refroidisseur et d'une quantité de chaleur générée par l'élément de commutation du second dispositif de conversion d'alimentation électrique ou d'une valeur de courant d'excitation correspondant à la quantité de chaleur générée par l'élément de commutation du second dispositif de conversion d'alimentation électrique.

13. Dispositif de commande pour véhicule ferroviaire selon l'une quelconque des revendications précédentes,
dans lequel un ventilateur (26) ou une soufflante est prévu(e) pour fournir de l'air : aux parties de rayonnement de chaleur du premier refroidisseur ou à au moins une des parties de rayonnement de chaleur respectives du premier refroidisseur et du second refroidisseur, et
lorsque le dispositif de contrôle, à détermination du fait que : le liquide de refroidissement est congelé, ou qu'au moins un des liquides de refroidissement respectifs du premier refroidisseur et du second refroidisseur est congelé, effectue une opération de réchauffement, le dispositif de contrôle arrête le ventilateur ou la soufflante entièrement.

14. Dispositif de commande pour véhicule ferroviaire selon l'une quelconque des revendications précédentes,
dans lequel le dispositif de contrôle est prévu sur le véhicule ayant un conduit d'aération pour fournir un vent de déplacement : aux parties de rayonnement de chaleur du premier refroidisseur, ou à au moins une des parties de rayonnement de chaleur respectives du premier refroidisseur et du second refroidisseur, et
lorsque le dispositif de contrôle, à détermination du fait que : le liquide de refroidissement du premier refroidisseur est congelé, ou qu'au moins un des liquides de refroidissement du premier refroidisseur et du second refroidisseur est congelé, effectue une opération de réchauffement, le dispositif de contrôle ferme le conduit d'aération.
